# EUROPEAN PATENT SPECIFICATION

(11) **EP 0 755 532 B1**
(45) Date of publication and mention of the grant of the patent: **25.11.1998**
(21) Application number: 95913910.6
(22) Date of filing: 06.04.1995
(51) Int. Cl.: G02F 1/1335, G02F 1/141

(54) **DISPLAY SCREEN**
BILDSCHIRM
ECRAN D'AFFICHAGE

(30) Priority: 06.04.1994 GB 9406742
(43) Date of publication of application: 29.01.1997
(73) Proprietor: Screen Technology Limited, Harston, Cambridge CB2 5NX (GB)
(72) Inventor: CROSSLAND, William, Alden, Harlow, Essex CM20 2QD (GB); DIXON, Alan Colin, Ipswich, Suffolk IP4 2TJ (GB); THOMAS, John, New Buckenham, Norfolk NR16 2AN (GB)
(74) Representative: Gibbs, Christopher Stephen
(86) International application number: GB9500770
(87) International publication number: WO9527920

(56) References cited:
- EP-A- 0 021 308
- EP-A- 0 185 495
- EP-A- 0 240 010
- EP-A- 0 369 730
- EP-A- 0 529 832
- EP-A- 0 556 606
- DE-A- 4 123 696
- FR-A- 2 349 905
- GB-A- 2 274 191
- IBM TECHNICAL DISCLOSURE BULLETIN, vol. 29, no. 111, 1987 NEW YORK US, pages 4838-4839, 'Backlighting for Liquid Crystal Display'

## Description

This invention relates to liquid-crystal displays.

Thin panel screens are available which use liquid crystal devices, usually of the twisted nematic or supertwisted nematic type, operating in "Grey Scale" or passive mode in which orthogonal electrode grids are used to address individual pixels using multiplexing. However, their slow speed of operation, measured in milliseconds, is a major drawback and when passively multiplexing greater than 100 ways viewing angles are severely restricted for such displays. Moreover supertwisted nematic displays, being wavelength-sensitive, show poor black/white contrast.

The use of thin-film transistors, usually referred to as TFT's, allows the twisted-nematic effect to be used at higher multiplexing levels with good contrast. However it requires production processes which are both expensive and difficult to control. Each pixel requires a TFT and since millions of these may be needed and only one or two faults are sufficient to produce an unacceptable display, overall yields of displays rapidly diminish as larger pixel arrays are required. A large, thin, full-colour display panel, for instance for use in broadcast television, is still not commercially feasible.

The standard television transmission system in the United Kingdom uses the PAL video system of colour production. In this the frame time for each picture update is 40 milliseconds (1/25 or .04 sec) and with 625 lines per frame each line is addressed for 64 microseconds (64 µsecs). Therefore televisions which use cathode ray tubes with an electron beam scanning system scan each line in 64 µsecs. The same line is re-addressed after a delay of 40 millisecs (frame time); interlacing of the lines takes place but it is not necessary to explain the reasons for this for the purposes of this invention. The final display currently provided by cathode ray tubes (CRT's) is second to none, but CRT's are of course bulky and power-consuming. The invention is an attempt to provide a liquid-crystal display which can equal or surpass the best CRT's for the standard 625-line system and even for the new high-definition screen.

Various designs of LC displays have been suggested. In many current types the liquid crystal is used as a shutter, using either the scattering effect or its birefringent properties, to select whether light from a light source under a given pixel of the LC layer reaches the viewer. This arrangement leads to problems with viewing angle, since the LC is sensitive to the angle at which the light passes through it.

One promising approach to dealing with the viewing-angle problem is to use phosphors for the visible light emissions; for instance, EP-A-185495 (ITT) shows a display unit comprising a UV radiation source which is used to cause phosphor elements on a screen to glow, wherein the supply of radiation to the phosphor elements is controlled by means of a liquid-crystal shutter. The back plate, which guides the light to the LC layer, is side-lit and the liquid crystal itself operates on the scattering principle, where the light is contained within the light guide and the LC by total internal reflection, until it meets a LC cell which is activated, whereupon the light is scattered. Some of the scattered light, namely that proportion which is deflected sufficiently near to the normal of the layers, then passes out of the LC layer to the corresponding phosphor dot, which then glows.

Such devices have the advantage among others that the light sent to the viewer (the "display" light) is not the light that has passed through the LC layer (the "activating" light); this fact alone can contribute markedly to solving the typical LCD problem of restricted viewing angle, a problem which is not solved by displays using phosphors or fluorescent materials underneath the LC layer, such as that shown in US 4167307 (Siemens).

Another approach is described in US 4830469 (US Philips). Here a supertwist liquid crystal, i.e. one having a molecular twist of more than 180°, is used. Such LCs are difficult to use in the conventional way with filters for colour displays, so this display uses phosphors. The phosphors, instead of being on the outside of the glass plate which encapsulates the liquid-crystal layer, are placed directly on the LC electrodes on one side. Accordingly it is very difficult to incorporate a polariser, and this display therefore does away with one or both polarisers and uses a dichroic UV dye instead, which restricts viewing angle. Further it is not possible to use standard TN, STN or ferroelectric LCs with the Philips arrangement.

The main features of the system on which the invention is based are as follows:
A. A plurality of self-radiating elements are used, exemplified by materials known as "Phosphors", forms of which are used in current cathode-ray tubes;
B. The phosphors can be caused to emit visible light by energising them with energy, preferably monochromatic light in the near ultra-violet;
C. To control the output of radiation from each pixel, electro-optic shutters are used to restrict the otherwise free flow of energy passing to the radiating material. The shutters are controlled in such a way that each self-radiating pixel is individually processed. At any given point in time each pixel point has individual visible light output characteristics.

The shuttering between the excitation energy source and the light-radiating material should ideally be applied in such a way that the viewed output can be perceived as a continuous progression from one output sequence to the next at rates which will allow moving imagery to be seen by the viewer without flicker. This process is usually described as modulation.

The invention can use conventional liquid-crystal layers to improve upon current thin screens, making them less costly and more energy-efficient, but it also allows the conception of new display panels using state-of-the-art, microsecond-response-time LCs such as ferroelectric, distorted-helix or electroclinic materials.

Different liquid crystals require individual modulation approaches; for instance, twisted nematic, super-twisted nematic, distorted helix and electroclinic forms can grey-scale, and they also return to their unwritten state when the voltages are removed. Ferroelectric materials, on the other hand, are bi-stable (transmissive/non-transmissive) and remain written once addressed. It is therefore necessary to provide each type of liquid crystal with particular information via the address system which will enable it to act a modulating shutter. For twisted nematic and super-twisted nematic passive and active TFT addressing are used. Passive multiplexing relies on the electro-optic effect responding to the RMS of the applied AC voltages. In the case of electroclinic and distorted helix effects the DC voltage will allow a similar response. This is true analogue modulation.

Ferroelectric liquid-crystal effects on the other hand have only on-off states and thus cannot be multiplexed in this way. Ferroelectric liquid crystals are multiplexed in a binary fashion by using their memory. Domain switching, which involves only partially switching ferroelectric liquid crystals such that only a part of each pixel is switched, is possible. This allows a form of greyscale, with memory, to be achieved. Hitherto it has not been possible to achieve passive multiplexing of distorted helix and electroclinic liquid crystals, so they have needed to be multiplexed with active backplanes. However it is an object of the invention to allow such effects to be passively multiplexed.

According to one aspect of the invention there is provided a display screen comprising: a backing for supplying activating light; a liquid-crystal layer containing cells which when suitably addressed allow light to pass from the backing layer through the cells; and an emitting layer containing phosphor-type elements corresponding to the cells, for emitting display light when activating light reaches them; characterised by the further provision of means located at least in part between the backing and the liquid-crystal layer, for collimating the activating light towards the phosphor-type elements.

The collimation means is preferably an optical arrangement such as an array of lenses (or 'lenslets'), or a graded-refractive-index layer. Such a layer or array may alternatively or additionally be introduced or located between the light guide and the liquid-crystal modulating substrate, especially when liquid crystal cells exhibiting birefringence are employed, as will be described in greater detail hereinafter.

An example of a collimation device usable in liquid-crystal displays generally is shown in IBM Technical Disclosure Bulletin Vol. 29, No. 11, April 1987, pp. 4838-9. Here a light-guide plate is combined with a lenslet plate to direct relatively well collimated light normally towards the LC cells.

The light source may comprise a transparent plate, forming the light guide, with edges into which radiation may be supplied from a source such as a discharge lamp, from which the radiation is guided within the plate. A collimation means can then be provided by indentations or protuberances, forming points from which the radiation may be emitted.

As the liquid-crystal-containing layer is very thin relative to that on which the phosphors are placed, etching of the phosphor-carrying substrate for each pixel can be used to bring the phosphor closer to the modulating liquid crystal.

The thin screen device is a composite structure designed so that the radiating phosphor used for each individual emission can be incorporated into the screen in any preferred position on or within the panel, on the surface or internally.

Ultra-violet light can be introduced into the panel in one of two ways, either by directly applying the U.V. source generally to the back of the assembled panel or to the edge or edges of a transparent substrate which will act as a light guide. Depending on which illumination source is chosen liquid crystal shutter control can be provided to effect the required modulation.

To maximise the input of U.V. light into the modulating substrate, when the panel is edge-lit, provision may be made to bring specular reflections normal to the apertures or pixels. This can be achieved through the use of a mirror which directs the edge lighting in such a manner. Alternatively scattering of the light can take place either on the back surface of the panel/screen or through the use of indentations on the upper surface of the light-guide layer. The indentations are preferably treated, possibly roughened, to enable scattering to take place. Incorporation of scattering entities in the cell itself could also be used.

General backlighting of liquid crystals is an excellent method of illumination when the birefringence effect is employed. It is thus desirable to apply edge lighting to birefringent systems. If the light introduced into the panel through edge illumination is made to scatter within the light-guide then liquid crystals with birefringent electro-optic characteristics can be used with edge lighting. Thus side-lit, lightguided panels/screens using twisted nematic, super-twisted nematic, ferroelectric and electroclinic liquid crystals are possible.

In embodiments of the invention therefore the liquid-crystal layer on the backing layer can be sandwiched between two polarizing layers and contain cells whose birefringence can be altered so as to affect the passage of light from the backing layer through the cell; and light normalisation means are provided for normalising light input towards the cells. An example of such light normalisation means is constituted by a roughened indentation on the surface of the wave guide for each liquid crystal cell.

There can be no general backlighting of panels/screens when the modulating substrate contains liquid crystals of the scattering-mode type; however, they are excellently suited to edge-lit devices. Such modulating substrates can be provided using the scattering electro-optic effect in bi-stable ferroelectric liquid crystals. This relies on a short-pitch helix scattering in one memory state and switching to a clear memory state. If such scattering types are used, for example bi-stable ferroelectrics, then the use of polarizers may be completely eliminated.

The elimination of one polarizer may also be possible if a dichroic dye is incorporated in the modulating liquid crystal or by using the dichroic nature of the liquid crystal itself when operating with wavelengths of light provided by the ultra-violet spectrum (around 300 nanometres). Liquid crystals do not absorb significant amounts of visible radiation, therefore their dichroic nature cannot be used in panels/screens which operate with input visible light but since in the invention the shuttered light is not the light emitted to the viewer it is possible to use U.V. light.

In further embodiments of the invention there is provided a display screen comprising: a backing layer acting as a source of activating light; a bi-stable liquid-crystal layer containing cells which when suitably addressed allow light to pass from the backing layer through the cell; a control means for addressing the cells in turn, with a given address time for each cell; and an emitting layer containing phosphor-type elements corresponding to the cells, for emitting display light when activating light reaches them; characterised in that the control means is adapted to activate the cell for a variable fraction of the address time, so as to vary the brightness of the corresponding phosphor-type element.

A grey scale is thus achievable even with bistable LC layers; such LCs would be typified by ferroelectric (FE) liquid crystals but tight-pitch cholesteric (i.e. chiral nematic) LCs, for instance, behave in the same way if the address voltages are kept within the hysteresis range. The control of the pixels of a phosphor screen having a plurality of phosphor regions, a source of radiation and a corresponding plurality of control means arranged to control the transmission of radiation from the source to the phosphor regions involves simultaneously addressing each pixel in a given row to enable only the control means in that row to operate and simultaneously supplying a binary signal to the control means which causes the transmission of radiation, the duration of the binary signal determining the period during which radiation is allowed to reach the phosphor forming the corresponding pixel thereby determining the brightness of the pixel.

An alternative method is to let the magnitude of the voltage of the signal determine the radiation which is allowed to reach the phosphor forming the corresponding pixel, thereby determining the brightness of the pixel.

Displays using the present invention allow the possibility of a further multiplexing option since the natural persistence of the phosphors can be utilized to give a new kind of analogue response. The time available to switch is 64 µsecs. However, binary ferroelectric shutters can switch fully much faster than this. Thus the transmissive state can be present for any period down to the liquid crystal minimum response time during the 64 µsec period and a greyscale can result. By utilising analogue effects the step in greyscale involved in the lowest level, being that of the minimum liquid-crystal response time, can be avoided. Thus the preferred effects would be the electroclinic, distorted helix and domain-switched ferroelectric effects.

With the inclusion of ultra-violet light as an energising source, phosphors as visible light radiators and a pixel address system which will modulate the excitation energy through greyscale, analogue, processing, the persistence of the phosphors can be used to provide a new, multiplexed, thin panel/screen display utilizing fast analogue liquid-crystal electro-optic effects.

The polarizer and the analyzer are arranged in such a manner that the natural state of the liquid crystal is in non-transmissive form. When the pixels are addressed through multiplexing techniques within the 64 µsec line time, phosphor elements emit light with sufficient output such that the eye and therefore the brain are given the perception of continuity. For a deeper understanding of the invention, some embodiments will now be described, by way of example only, with reference to the accompanying drawings in which:
Figs. 1A and 1B show the general layout of pixels in a display panel;
Fig. 2 is a cross-section of a display panel with a continuous liquid-crystal substrate, by way of illustration of the background of the invention;
Fig. 3 is a cross-section of a display panel representing an embodiment of the invention;
Figs. 4 and 5 show arrangements corresponding to Fig. 2 but with a liquid-crystal substrate containing discrete holes, by way of further background;
Fig. 6 shows a further advantageous light guide and collimating lens arrangement;
Fig. 7 shows scattering and collimating means, variations of which can be used to provide ultra-violet light for modulation by any preferred liquid crystal. Depending on the chosen liquid crystal scattering or simple reflection may take place on the back surface of the light guide substrate;
Fig. 8 is a magnified view of part of Fig. 9;
Figs. 9 and 10 show further embodiments of the invention.
Fig. 11 shows typical modulation voltage waveforms used when addressing ferroelectric liquid crystals;
Figs. 12 and 13 schematically show address voltages to be used;
Figs. 14 and 15 show aspects of the orientation of LCs with respect to the polarisers; and

In respective figures of the drawings, like reference numerals denote like parts.

The thin panel/screen display will generally be provided with a matrix of radiating points as shown in **Fig. 1A**. An individual radiating phosphor dot pixel is indicated at 11. Each pixel is provided with phosphor material which emits light in the visible spectrum after the application of modulated ultra-violet light.

Fig. 1A shows the line and row arrangement for the radiating points. Indicated at 5 is the panel with its plurality of phosphor dots. Shown at 7 and 9 respectively are the upper and lower address lines made of a suitable transparent conductive materials such as indium tin oxide. The choice of a particular line pair, one upper and one lower, will allow the provision of modulation information to the modulating layer on an individual pixel basis. Although each pixel point can be addressed individually at any point in time or in groups if so required, the preferred method uses simultaneous addressing of all the pixels in a given row at the same time, every pixel point in the chosen row being provided with individual modulating information.

When the pixel points in a given line, such as line (1), in Fig. 1A are addressed the phosphor persistence allows visible light emission from each pixel in the row to continue after the address information has ceased and subsequent rows on the panel/screen are being supplied with modulating information. All pixels can be radiating visible light during the picture-forming process but each horizontal line is addressed at different times during the same period.

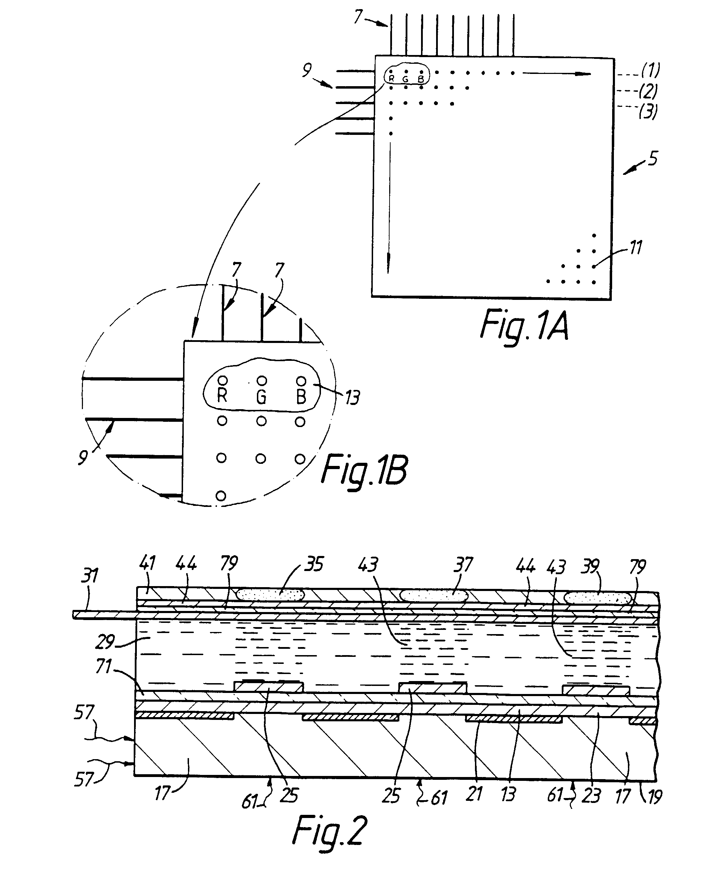

The pixels' phosphors are grouped in Red, Blue and Green triad or unit cell formation as shown in Fig. 1B. Each cell contains one red, one blue and one green radiating phosphor. Each triad/unit cell, when supplied with suitable address information through each liquid-crystal modulating shutter to be described below, can reproduce all colours in the visible spectrum.

Figs. 2 to 10 show different configurations of panel structure; layers 17, 21, 23, 71, 25, 31, 79, 41, 44 and different colour emitting phosphors 35, 37, 39 are common to each. Layer 17 is the backing layer, which must be transparent to the light used, preferably ultra-violet light, and when edge-lit acts as a light guide. Layer 21 is its reflective surface, conveniently achieved by the deposition of molecular amounts of reflective material, possibly silver. The next layer, 23, is the polarizer, on which is formed the liquid crystal lower cell wall 71. Lower address lines 25 and upper address lines 31 surround the liquid crystal layer 29, which is bounded on the upper side by an upper cell wall 79. Layer 44 is the upper polarizer, or analyzer, and layer 41 is the final outer layer, which contains the radiating phosphor dots 35, 37 and 39.

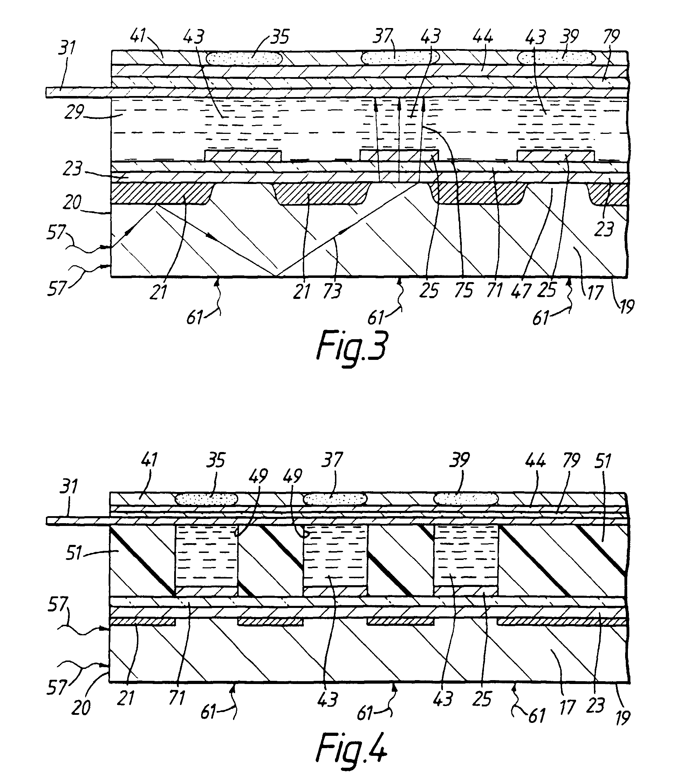

In Figs. 2 and 3 the continuous liquid-crystal substrate is shown generally at 29 with sections between the upper and lower address lines in the active mode given the numeral 43. This substrate may be around 5 microns thick for a super-twisted nematic display and around 1.5 to 2 microns for ferroelectric and electroclinic displays. The layers are of course not shown to scale in the drawings. In an actual cell the glass layers such as 71 and 79 might be 500µ thick.

The setup shown in **Fig. 2** corresponds broadly to that shown in EP-A-185495 (ITT). It differs in that it uses birefringence, whereas the display shown in that document uses liquid crystals of the scattering type and contains no polarisers. Operation of the Fig. 2 device is as follows. Ultra-violet light 57 enters the backing layer 17 at the side and is internally reflected at the front and rear surfaces. The reflecting grid 21 ensures that the UV light can only enter a cell at the pixel point. The LC material normally rotates the polarisation of light emerging from the backing layer 17 via the polariser 23, so that it is stopped by the analyzer 44 and the cell appears dark. When a cell of the liquid-crystal matrix is activated it ceases to rotate the transmitted light, and as a result the ultra-violet light impinging on that part of the LC layer reaches the phosphor dot 35, 37, 39, which then emits light of the appropriate colour.

It is important that crosstalk is eliminated in such a display. This is achieved to a certain extent in Fig. 2 by the grid of apertures in the reflective layer 21 which direct the light to the individual cells. For a more pronounced effect, in the embodiment of the invention shown in **Fig. 3**, the upper surface of the backing layer 17 has curved eruptions or protuberances 47 which act as collimating lenses. "Collimation" is understood here in a loose sense as meaning the direction or collection of light to a more or less parallel normal direction towards the phosphors. Where cells have birefringence which can be altered so as to affect the passage of light therethrough, collimated light needs to enter the cells. Edge lighting will require not merely collimation of light before it enters the cells, but directing of light towards collimation means. Such redirection is termed "normalisation" herein. With bistable liquid crystals, scattered light emerging from the cells will require collimation or focusing, as aforesaid, towards the phosphors. These optical features will become clearer from the description which follows.

Thus, reverting to Fig. 3, ultra-violet light is fed into the layer 17 either generally through the back surface, 19, indicated at 61, or at its edge or edges, 20, indicated at 57. This light either passes directly through the polarizer 23, or is first reflected back into the body of layer 17 by the reflective layer 21 and passes through the polarizer after being thus scattered in the manner previously described.

The eruptions maximise the capture of provided ultra-violet light before it passes through the modulating substrate containing liquid-crystal material. The spaces between the eruptions are filled with reflective material such as silver. The ultra-violet light 75 is shown undergoing collimation by the aforementioned eruptions, 47, on the surface of the lightguide substrate, indicated at 17. One ray, indicated at 73, is shown in the body of this substrate. The lens formed by the eruption 47 effectively collects U.V. light from the substrate layer 17, directing it towards the pixel; this increases efficiency and reduces crosstalk.

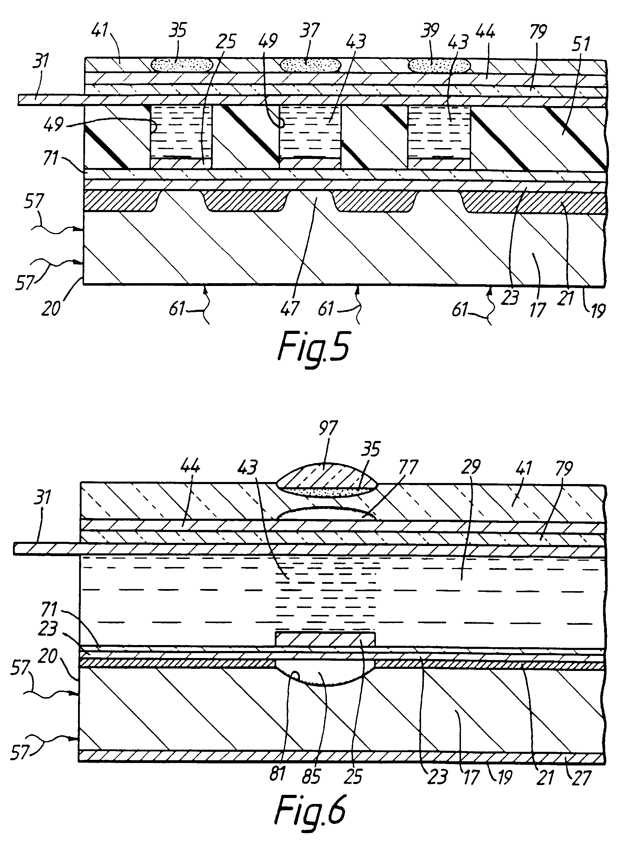

**Figs. 4 and 5** show an alternative way of reducing crosstalk. The method of ultra-violet light provision is the same as that previously described. In the configuration shown the liquid-crystal modulating material is held in discrete holes, indicated at 49, provided in an opaque substrate 51 such as polymeric material. Similarly the configuration shown in Fig. 5 holds the modulating liquid-crystal material in the same way, in combination with lenses 47 as in Fig. 3. This effectively collimates the light to the respective phosphor.

**Fig. 6** shows a further way of increasing the directionality of the U.V. light. Here substrate layer surfaces etched at 81 underneath each of the cells cause scattering of ultra-violet light; elsewhere a reflective layer 21 is applied. The surfaces are prepared by etching a depression 85; there is a similar etching 77 on the lower surface of the glass outer layer 41. Further lensing may be provided at 97 if required.

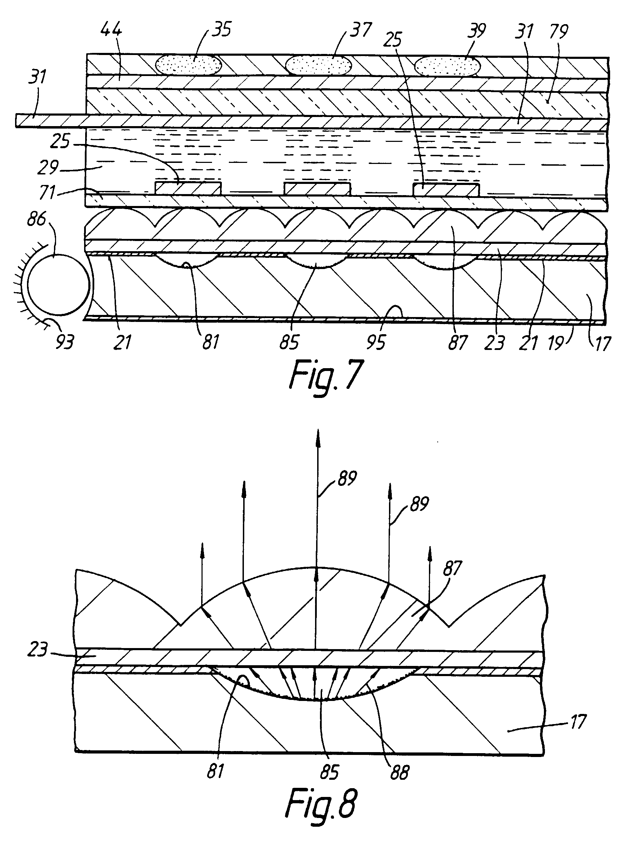

**Fig. 7** shows a further development using a lenslet array, shown at 87. Such an array is provided to collimate the ultra-violet light scattered by the prepared surface 81, including the etched indentations 85, or alternatively by the prepared surface 95. Here the collimation all takes place underneath the LC layer. Specular reflections within the lightguide can be brought substantially normal to the apertures/pixels by the inclusion of a mirror 93 behind the illuminating means 86, if required.

**Fig. 8** shows the collimating effect of the lenslet array, 87, for scattered U.V. light 88 provided via the lightguide 17. The shown lenses, 87, can be replaced by an array which achieves the same effect via a graded refractive index system.

The invention can also be applied to liquid crystals exhibiting the electroclinic effect. With such an effect the optic axis lies in the plane of the liquid crystal layer. It rotates in this plane to an extent proportional to the applied voltage, the direction changing with its sign. The maximum switching angle possible depends on the liquid-crystal material available. It is presently about 22.5 degrees, so that a voltage change from + to - can produce a maximum change of 45 degrees.

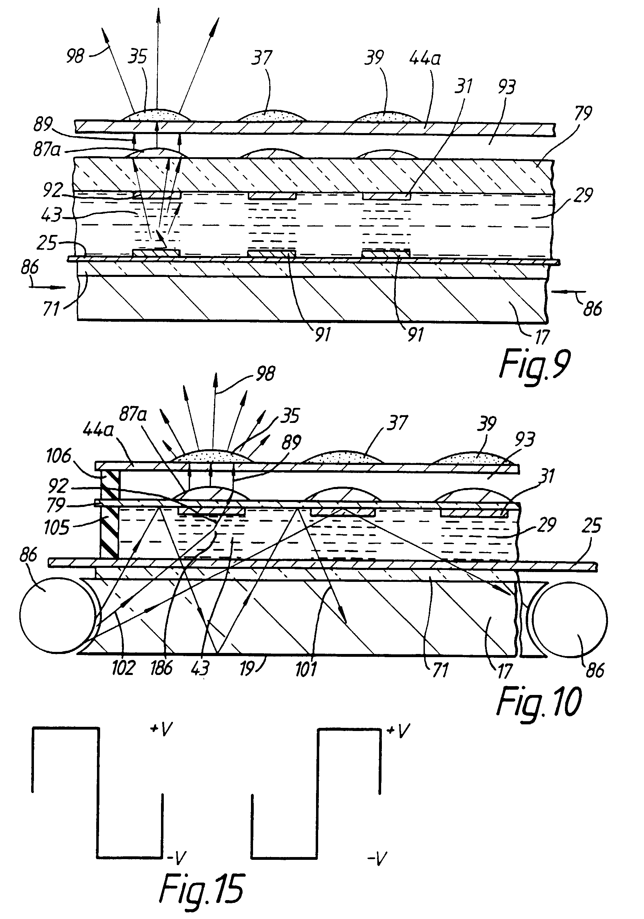

**Fig. 9** shows a varied form of the panel such as can be used in any of the preceding embodiments. On the lower address line 25 a reflective material 91 has been deposited in areas corresponding to each cell, or part of each cell. The purpose of this is to prevent light having entered the LC layer from being scattered back into the light guide layer, so increasing the forward transmission of energy represented by backscattered rays 92 travelling to a lenslet array 87a which unlike that in Fig. 7 is above the LC layer. After crossing a gap 93 typically containing air the UV light causes the phosphors 35, 37, 39 located on the glass backing plate 44a to glow at 95.

**Fig. 10** represents an architecture of the scattering type similar to that shown in Fig. 9 where the UV light is scattered in the liquid-crystal layer 29, sandwiched between two glass layers 71 and 79, and is only collimated afterwards towards the phosphors 35-39. The light emerges from the sources 86 and propagates within the backing layer 17. From cells in the non-scattering state light is totally internally reflected, as shown at 101. At activated cells light 102 is scattered and some of it proceeds to the lenslet array 87a. In Fig. 10. 105 represents an LC cell edge seal and 106 an air gap seal.

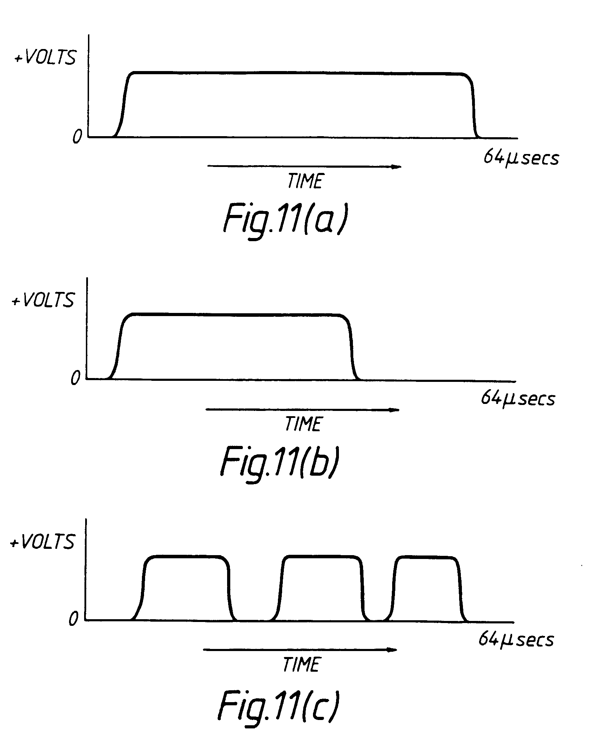

The liquid crystal can advantageously be a ferroelectric LC. A disadvantage of such is that they are bistable, so that varying the applied voltage does not produce the desired grey scale. The invention caters for this need by varying the activation time during the address cycle. **Fig. 11** shows the principle. In (a) the full 64µs line time is used, in (b) only a part of it and in (c) again only a part, but divided into separate sections. The FE LC is thus addressed only part of the available time; the phosphor integrates the amount of light passing and glows with a corresponding, nearly constant, brightness to give a grey scale.

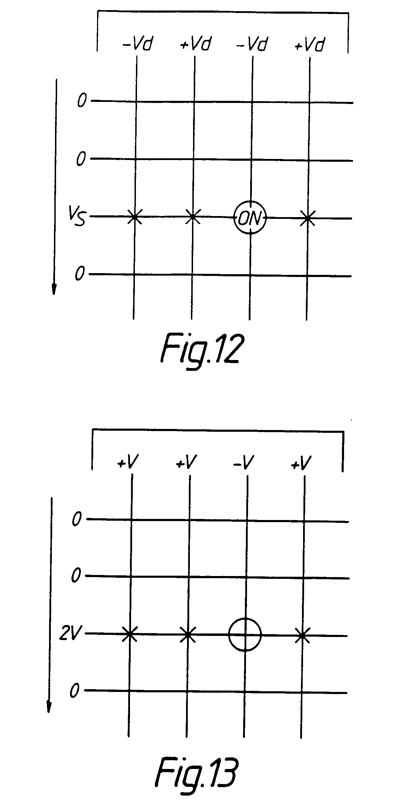

**Fig. 12** illustrates the addressing of an array of pixels a line at a time. The strobe voltage Vs determines which row is being addressed and the voltage applied to the columns is between -Vd and +Vd (the data voltage). -Vd applies the maximum voltage to the pixel and +Vd the minimum.

**Fig. 13** shows that if Vs = 2xVd this maximises the voltage applied to the pixel, namely Vs + Vd, the "select" voltage, compared with the voltage applied to the other pixels whilst their row is being addressed, namely the "unselect" voltage Vs-Vd, the error voltage appearing on all other pixels (+ or - Vd).

The voltage on rows of pixels not being currently addressed does not fall to zero but to 1/3 the "select" voltage. This will cause a general illumination of the screen to an extent that depends on the optical response of the liquid crystal to voltage (which is known to be superlinear, thereby reducing the effect), and the response of the phosphor to U.V. light.

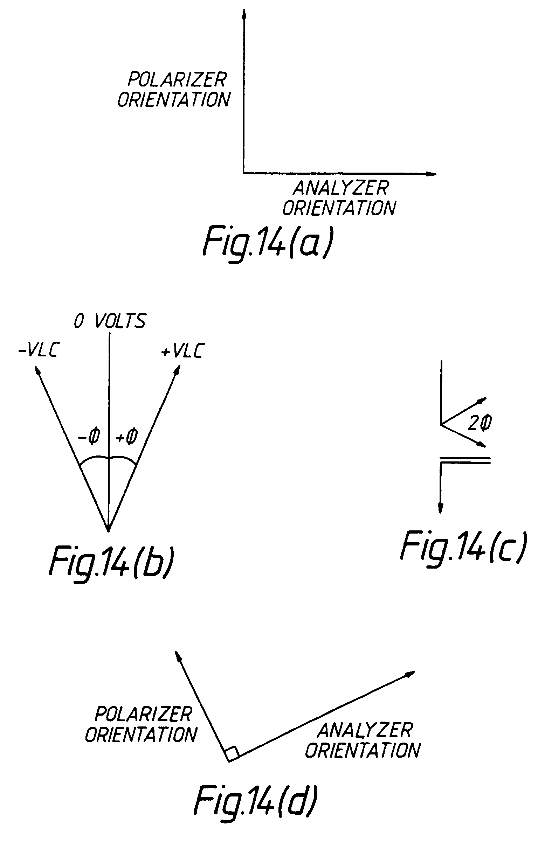

**Fig. 14** shows an arrangement for the polarizer and analyzer so that the "off" state of the liquid crystal (no voltage) would give zero light transmission. With this arrangement +V and -V result in identical optical transmissions. This allows a symmetrical bipolar pulse (**Fig. 15**) to be used for each of the waveforms Vd and Vs. If this is done the waveforms experienced by the liquid crystal contain net zero DC component. This is advantageous because it extends the life of the liquid crystal - all conventional liquid-crystal devices arrange the electrical drive waveforms to achieve net zero DC.

Maximum optical transmission can be achieved, as shown in Fig. 13(d), by aligning the polarizer with the orientation of the optic axis of the liquid crystal with -V applied (i.e. -22.5 degrees). The analyzer remains at right angles to the polarizer. This arrangement gives the maximum "on" state transmission but it does not allow net zero DC to be applied to the pixels. In addition the optical transmission of pixels on rows not currently being addressed is much higher.

The optimum addressing scheme is one which is a trade-off between the "on" state transmission on the one hand and voltage discrimination on the other.

The principles discussed above could be used with any LCD panel that can modulate U.V. light, such as twisted nematic and super-twisted nematic devices providing variable transmission (analogue) shutters. The principles can also be used with scattering devices such as smectic A, ferroelectric in scattering mode and short pitch cholesteric. The super-twisted nematic electro-optic effect offers the highest level of multiplexibility and therefore appears to be the most appropriate. Super-twisted nematic devices do not shutter the whole visible spectrum equally. The illumination method described may render this unimportant and it may be possible to optimise the super-twisted nematic effect for shorter-wavelength U.V. radiation.

The persistence of the phosphor included in the described invention will allow the electroclinic effect to be multiplexed offering a new kind of analogue, colour, liquid-crystal display. Thin High-Definition Television displays are also possible using the described invention as the modulator/switching shutter speeds used, together with the phosphor persistence, can operate at the faster scan rates implicit in such devices.

## Claims

1. A display screen comprising: a backing (17) for supplying activating light; a liquid-crystal layer (29) containing cells (43) which when suitably addressed allow light to pass from the backing layer through the cells; and an emitting layer containing phosphor-type elements (35, 37, 39) corresponding to the cells, for emitting display light when activating light reaches them; characterised by the further provision of means (49; 77, 81; 87; 87a) located at least in part between the backing (17) and the liquid-crystal layer (29), for collimating the activating light towards the phosphor-type elements.

2. A display screen according to claim 1, in which the collimating means is in the form of an array of lenses (87; 87a), or of material of graded refractive index, corresponding to the cells.

3. A display screen according to claim 1 or 2, in which the collimating means includes lenses (47) formed in the backing (17).

4. A display screen according to claim 3, in which the collimating means includes a depression (85) in the backing underneath each cell, having a rough surface for scattering light into the liquid-crystal layer (29).

5. A display screen according to claim 1 or 2, in which a further part of the collimating means (87a) is located between the liquid-crystal layer (29) and the phosphor-type elements (35, 37, 39).

6. A display as claimed in any preceding claim, in which the liquid crystal is of the twisted-nematic, super-twisted-nematic, ferroelectric, short-pitch cholesteric or electroclinic type.

7. A display screen according to any preceding claim, in which the liquid crystal incorporates a dichroic dye or has itself dichroic properties.

8. A display screen according to any preceding claim and further including a light source (86) for inputting light at the edge of the backing (17); in which the liquid-crystal layer (29) is on the backing, sandwiched between two polarizing layers (23, 44), and contains cells (43) whose birefringent properties can be altered so as to affect the passage of light from the backing through the cell; and in which means (47, 81, 87) are also included for normalising input light from the backing towards the cells.

9. A display screen according to any of claims 1 to 7 and further including a light source (86) for inputting light at the edge of the backing (17); in which the liquid-crystal layer (29) is on the backing, contains a dichroic dye or is itself dichroic, has a polarizing layer for polarizing the input light and contains cells (43) whose birefringent properties can be altered so as to affect the passage of light from the backing through the cell; and in which means (47, 81, 87) are also included for normalising input light from the backing towards the cells.

10. A display screen according to any preceding claim, in which the liquid-crystal layer (29) is bi-stable, and which comprises: a source of activating light; a control means for addressing the cells (43) in turn, with a given address time for each cell; and an emitting layer containing phosphor-type elements (35, 37, 39) corresponding to the cells, for emitting display light when activating light reaches them; in which the control means is adapted to activate the cell (43) for a variable fraction of the available time, so as to vary the brightness of the corresponding phosphor-type element.

11. A display means as claimed in claim 10, comprising a tight-pitch cholesteric liquid crystal and control means which keeps the address voltages within the hysteresis range of the liquid crystal.

## Patentansprüche

1. Bildschirm umfassend : Eine Rückenschicht (17) zur Zufuhr von Aktivierungslicht; eine Flüssigkeitskristallschicht (29), welche Zellen (43) enthält, welche, wenn sie in geeigneter Weise adressiert werden, es dem Licht erlauben, ausgehend von der Rückenschicht die Zellen zu passieren; und eine Emissionsschicht, welche phosphorartige Elemente (35, 37, 39) enthält, welche den Zellen entsprechen, um Bildschirmlicht zu emittieren, wenn sie das Aktivierungslicht erreicht, dadurch gekennzeichnet, daß im weiteren Mittel (49; 77, 81; 87; 87a) vorgesehen sind, welche zumindest teilweise zwischen der Rückenschicht (17) und der Flüssigkeitskristallschicht (29) angeordnet sind, um das Aktivierungslicht parallel auf die phosphorartigen Elemente zu richten.

2. Bildschirm nach Anspruch 1, bei welchem die Mittel zum Parallelrichten in Form einer Reihe von Linsen (87; 87a) vorgesehen sind oder von Material mit abgestufter Brechzahl, welche den Zellen entsprechen.

3. Bildschirm nach einem der Ansprüche 1 oder 2, bei welchem die Mittel zum Parallelrichten Linsen (47) beinhalten, welche in der Rükkenschicht (17) geformt sind.

4. Bildschirm nach Anspruch 3, bei welchem die Mittel zum Parallelrichten eine Vertiefung (85) in der Rückenschicht unter jeder Zelle beinhalten, welche eine rauhe Oberfläche hat, um Licht in die Flüssigkeitskristallschicht (29) zu streuen.

5. Bildschirm nach einem der Ansprüche 1 oder 2, bei welchem ein weiterer Teil der Mittel zum Parallelrichten (87a) zwischen der Flüssigkeitskristallschicht (29) und den phosphorartigen Elementen (35, 37, 39) angeordnet ist.

6. Bildschirm nach einem der vorhergehenden Ansprüche, bei welchem der Flüssigkeitskristall von gewunden nematischer, super gewunden nematischer, ferroelektrischer, kurz geteilter cholesterischer oder elektroklinischer Art ist.

7. Bildschirm nach einem der vorhergehenden Ansprüche, bei welchem der Flüssigkeitskristall eine dichroitische Farbe enthält oder selbst dichroitische Eigenschaften hat.

8. Bildschirm nach einem der vorhergehenden Ansprüche, welcher im weiteren eine Lichtquelle (86) zur Eingabe von Licht am Rand der Rückenschicht (17) beinhaltet; in welchem die Flüssigkeitskristallschicht (29) an der Rückenschicht zwischen zwei polarisierenden Schichten (23, 44) schichtweise angeordnet ist und Zellen (43) beinhaltet, deren doppelbrechende Eigenschaften geändert werden können, um den Durchgang von Licht von der Rückenschicht durch die Zellen zu beeinflussen; und in welchem auch Mittel (47, 81, 87) zum Normalisieren von Eingabelicht von der Rückenschicht zu den Zellen hin beinhaltet sind.

9. Bildschirm nach einem der Ansprüche 1 bis 7, welcher im weiteren eine Lichtquelle (86) zur Eingabe von Licht am Rand der Rückenschicht (17) beinhaltet; in welchem die Flüssigkeitskristallschicht (29) an der Rückenschicht (17) angeordnet ist, welche eine dichroitische Farbe enthält oder selbst dichroitisch ist und welche eine Polarisierungsschicht zum Polarisieren des Eingabelichts hat und welche Zellen (43) enthält, deren doppeltbrechende Eigenschaften geändert werden können, um den Durchgang von Licht von der Rückenschicht durch die Zelle zu beeinflussen; und in welchem auch Mittel (47, 81, 87) zum Normalisieren von Eingabelicht von der Rückenschicht zu den Zellen hin beinhaltet sind.

10. Bildschirm nach einem der vorhergehenden Ansprüche, bei welchem die Flüssigkeitskristallschicht (29) bistabil ist und welcher folgendes umfaßt : eine Aktivierungslichtquelle; Kontrollmittel, um die Zellen der Reihe nach mit einer vorbestimmten Adressierzeit für jede Zelle zu adressieren; und eine Emissionsschicht, welche entsprechend den Zellen phosphorartige Elemente (35, 37, 39) enthält, zur Emission von Bildschirmlicht, wenn sie das Aktivierungslicht erreicht; in welchem die Kontrollmittel angepaßt sind, um die Zelle (43) für einen variablen Bruchteil der verfügbaren Zeit zu aktivieren, um die Helligkeit der entsprechenden phosphorartigen Elemente zu variieren.

11. Bildschirm nach Anspruch 11, umfassend einen eng geteilten cholesterischen Flüssigkeitskristall und Kontrollmittel, welche die Adressierspannungen innerhalb des Hysterese-Bereichs des Flüssigkeitskristalls hält.

## Revendications

1. Ecran d'affichage comprenant un support (17) pour fournir de la lumière d'activation; une couche de cristal liquide (29) contenant des cellules (43) qui, lorsqu'elles sont convenablement adressées, permettent à la lumière de passer de la couche de support à travers les cellules; et une couche émettrice contenant des éléments de type luminophore (35, 37, 39) correspondant aux cellules pour émettre de la lumière d'affichage lorsque la lumière d'activation les atteint, caractérisé par la présence supplémentaire de moyens (49; 77, 81; 87; 87a) situés au moins en partie entre le support (17) et la couche de cristal liquide (29) pour collimater la lumière d'activation vers les éléments de type luminophore.

2. Ecran d'affichage selon la revendication 1, dans lequel le moyen de collimation se présente sous la forme d'un réseau de lentilles (87; 87a) ou d'un matériau d'indice de réfraction étagé correspondant aux cellules.

3. Ecran d'affichage selon la revendication 1 ou 2, dans lequel le moyen de collimation comprend des lentilles (47) formées dans le support (17).

4. Ecran d'affichage selon la revendication 3, dans lequel le moyen de collimation comprend une dépression (85) dans le support en dessous de chaque cellule, ayant une surface rugueuse pour disperser la lumière dans la couche de cristal liquide (29).

5. Ecran d'affichage selon la revendication 1 ou 2, dans lequel une autre partie du moyen de collimation (87a) est située entre la couche de cristal liquide (29) et les éléments de type luminophore (35, 37, 39).

6. Ecran d'affichage selon l'une quelconque des revendications précédentes, dans lequel le cristal liquide est de type nématique torsadé, nématique supertorsadé, ferro-électrique, cholestérique à pas court ou électroclinique.

7. Ecran d'affichage selon l'une quelconque des revendications précédentes, dans lequel le cristal liquide contient un colorant dichroïque ou a des propriétés dichroïques lui-même.

8. Ecran d'affichage selon l'une quelconque des revendications précédentes et comprenant en outre une source de lumière (86) pour faire entrer de la lumière sur le bord du support (17); dans lequel la couche de cristal liquide (29) est située sur le support, prise en sandwich entre deux couches de polarisation (23, 44), et contient des cellules (43) dont les propriétés biréfringentes peuvent être modifiées de manière à affecter le passage de lumière du support à travers la cellule; et dans lequel des moyens (47, 81, 87) sont également inclus pour normaliser la lumière d'entrée provenant du support vers les cellules.

9. Ecran d'affichage selon l'une quelconque des revendications 1 à 7 et comprenant en outre une source de lumière (86) pour faire entrer de la lumière sur le bord du support (17); dans lequel la couche de cristal liquide (29) est appliquée sur le support, contient un colorant dichroïque ou est dichroïque elle-même, a une couche de polarisation pour polariser la lumière d'entrée et contient des cellules (43) dont les propriétés biréfringentes peuvent être modifiées de manière à affecter le passage de la lumière du support à travers la cellule; et dans lequel des moyens (47, 81, 87) sont également inclus pour normaliser la lumière d'entrée provenant du support vers les cellules.

10. Ecran d'affichage selon l'une quelconque des revendications précédentes, dans lequel la couche de cristal liquide (29) est bistable, et qui comprend une source de lumière d'activation; un moyen de commande pour adresser les cellules (43) tour à tour, avec un temps d'adressage donné pour chaque cellule; et une couche émettrice contenant des éléments de type luminophore (35, 37, 39) correspondant aux cellules, pour émettre de la lumière d'affichage lorsque la lumière d'activation les atteint; dans lequel le moyen de commande est à même d'activer la cellule (43) pendant une fraction variable du temps disponible de façon à faire varier la brillance de l'élément de type luminophore correspondant.

11. Moyen d'affichage selon la revendication 10, comprenant un cristal liquide cholestérique à pas étroit et un moyen de commande qui maintient les tensions d'adressage dans la plage d'hystérésis du cristal liquide.
